# EUROPEAN PATENT SPECIFICATION

(11) **EP 3 988 921 B1**
(45) Date of publication and mention of the grant of the patent: **30.04.2025**
(21) Application number: 20203563.0
(22) Date of filing: 23.10.2020
(51) Int. Cl.: G01N 15/1434, G01N 15/10, G01N 15/14

(54) **FLOW CYTOMETER AND METHOD OF FLOW CYTOMETRY**
DURCHFLUSSZYTOMETER UND VERFAHREN FÜR DIE DURCHFLUSSZYTOMETRIE
CYTOMÈTRE DE FLUX ET PROCÉDÉ DE CYTOMÉTRIE DE FLUX

(43) Date of publication of application: 27.04.2022
(73) Proprietor: SYSMEX CORPORATION, Kobe-shi Hyogo 651-0073 (JP)
(72) Inventor: Weinigel, Martin, Hyogo, 651-0073 (JP)
(74) Representative: Hoffmann Eitle

(56) References cited:
- WO-A1-2017/078672
- WO-A1-2019/121836
- WO-A1-2020/014187
- US-A1- 2007 190 525
- US-A1- 2009 116 011
- US-A1- 2017 241 893
- US-B2- 8 767 212

## Description

### Field of the disclosure

The present disclosure relates to a flow cytometer apparatus, and particularly to a flow cytometer apparatus which comprises a plurality of detectors. The present disclosure also relates to methods of flow cytometry which may be implemented in such apparatus.

### Technical background

Flow cytometry, discussed in, for example, US Patent 7,064,823, is a particle analysis technique in which a measurement sample containing particles such as cells flows in a stream through an interrogation point to which light is irradiated. Light originating from the interrogation point is analysed to measure properties of the particles in the sample. Such light from the sample may include forward-scattered light and right-angle scattered light. Flow cytometry has diverse applications in medical diagnosis, for example, haematology, as well as the analysis and quality control of biologically-manufactured foodstuffs such as wine and yeast.

An apparatus for flow cytometry is typically termed a flow cytometer. Flow cytometers adopt different optical configurations to measure properties of particles based on different optical phenomena. In particular, flow cytometers may be provided with a plurality of optical detection channels, each comprising an optical detector and associated optical elements for capturing light having a particular character from the interrogation point and directing it to the detector.

While a simple cytometer may use one or two optical detection channels, such as one or two fluorescent detection channels or one fluorescent detection channel and one scattering detection channel, more advanced analysis techniques may require simultaneous detection of fluorescence from the sample in multiple wavelength bands and/or simultaneous detection of scattered light from the sample travelling in different directions relative to the incident light.

However, the introduction of additional measurement channels to the optical configuration of a flow cytometer introduces complexity, renders the apparatus less compact, and typically results in reduced signal-to-noise.

Therefore, there is a need for a flow cytometer which is compact, allows for multiple optical detection channels, and can provide good signal-to-noise.

Each of patent application publications US 2007/190525 A1, WO 2019/121836 A1, WO 2017/078672 A1, US 8 767 212 B2, US 2017/241893 A1, WO 2020/014187 A1 and US 2009/116011 A1 form part of the state of the art relative to the present disclosure.

### Summary

According to a first aspect of the present disclosure, there is provided a flow cytometer according to claim 1.

In one configuration, the plurality of light detectors are arranged around a light path from the light source with respect to a point at which the light is incident to the particle in the channel.

In one configuration, the plurality of light detectors comprises a scattered light detector that is arranged to detect a scattered light that is scattered by the particle in a direction intersecting a light path from the light source, the scattered light detector arranged at an opposite side of the flow cell with respect to the incident side of the light and away from a light path of unscattered light from the light source.

In one configuration, a scattered light detector is located in a plane including an incidence direction of the light to the particle and the flow direction of the particle.

In one configuration, the scattered light detector has a light-receiving surface which is arranged to receive light scattered by the particle at an angle of between 65 degrees and a TIR angle with respect to the incidence angle of the light from the light source. In this configuration, the light-receiving surface is optionally arranged to extend across at least 50% of an angular range extending between 65 degrees and the TIR angle with respect to the incidence angle of the light from the light source at the particle, the TIR angle being an angle at which light scattered by the particle is totally internally reflected at the opposite side of the flow cell with respect to the incident side of the light.

In one configuration, the plurality of light detectors comprises a fluorescence detector having a light-receiving surface arranged to detect fluorescent light from the particle.

In one configuration, the light-receiving surface of the fluorescence detector is arranged parallel to the light path from the light source.

In one configuration, the light-receiving surface of the fluorescence detector is arranged along a first outer surface of the flow cell, and the plurality of light detectors comprises another fluorescence detector having a light-receiving surface that is arranged along a second outer surface opposite to the first outer surface. In this configuration, the light-receiving surfaces optionally extend across at least 25% of an angular range of a light cone extending between 30 and 150 degrees with respect to the incidence direction of the light from the light source at the particle.

In one configuration, the plurality of light detectors comprises at least three detectors that are arranged in three different directions.

In one configuration, the plurality of light detectors comprises at least two fluorescence detectors and at least one scattered light detector.

In one configuration, the at least two fluorescence detectors are located at a first height including a first position with respect to the flow direction of the particle and the scattered light detector is located at a second height including a second position which is different from the first position with respect to the flow direction of the particle.

In one configuration, the first height is at the same height as a point at which the light is incident to the particle in the channel.

In one configuration, the flow cytometer further comprises a reference detector arranged to detect a light from the light source that is reflected by an outer surface of the flow cell and a controller configured to adjust an output from at least one of the light source and the plurality of the detectors based on the light detected by the reference detector.

In one configuration, the light source is arranged so that light from the light source is incident on the flow channel at an angle corresponding substantially to Brewster's angle at outer surface of the flow channel and/or light from the light source is incident on the flow channel at an angle corresponding substantially to Brewster's angle at an inner surface of the flow channel.

In one configuration, the flow cell has a rectangular cross-section in a plane crossing the flow direction.

In one configuration, each of the plurality of light detectors is bonded to or in contact with surfaces of the flow cell.

In one configuration, the angle of incidence is between 45° and 80° at incidence to the flow cell.

In one configuration, the light is p-polarised at incidence to the flow cell.

In one configuration, at least one of the plurality of light detectors is a planar solid state detector.

In one configuration, at least one of the plurality of light detectors is a segmented detector.

In one configuration, the flow cytometer comprises a polarisation-selective element arranged between the flow cell and at least one of the plurality of light detectors.

In one configuration, the flow cytometer comprises a prism element arranged between the flow cell and at least one of the plurality of light detectors.

In one configuration, each of the plurality of light detectors are arranged around the flow cell without a lens therebetween. According to a second aspect of the present invention, there is provided a method of flow cytometry according to claim 24.

The second aspect of the present invention may be implemented with the flow cytometer of the first aspect of the present invention.

### Brief description of the drawings

For a better understanding of the present invention, and to show how the same may be carried into effect, reference will be made, by way of example only, to the accompanying drawings, in which:
Figure 1 depicts a flow cytometer of the present disclosure;
Figure 2 depicts a block diagram of a control system of the flow cytometer of the present disclosure;
Figure 3 depicts a sample analysis method usable with the flow cytometer of the present disclosure;
Figure 4 depicts a flow cell of the flow cytometer of the present disclosure;
Figure 5 depicts an optical interrogation condition used in the flow cytometer of the present disclosure;
Figure 6 depicts a typical optical detection arrangement used in the flow cytometry;
Figure 7 depicts one optical layout usable in the flow cytometer of the present disclosure;
Figure 8 depicts an optical interrogation condition usable in the flow cytometer of the present disclosure;
Figure 9 depicts an alternative optical layout usable in the flow cytometer of the present disclosure;
Figure 10 depicts a more detailed view of the optical interrogation condition;
Figure 11 depicts another more detailed view of the optical interrogation condition;
Figure 12 depicts an alternative detection configuration usable in the flow cytometer of the present disclosure;
Figure 13 depicts a first alternative configuration of the flow cell usable in the flow cytometer of the present disclosure;
Figure 14 depicts a second alternative configuration of the flow cell usable in the flow cytometer of the present disclosure;
Figure 15 depicts a third alternative configuration of the flow cell usable in the flow cytometer of the present disclosure;
Figure 16 depicts a fourth alternative configuration of the flow cell usable in the flow cytometer of the present disclosure;
Figure 17 depicts another optical interrogation condition usable in the flow cytometer of the present disclosure;
Figure 18 depicts another optical layout usable in the flow cytometer of the present disclosure;
Figure 19 depicts a further optical interrogation condition usable in the flow cytometer of the present disclosure;
Figure 20 depicts a further optical layout usable in the flow cytometer of the present disclosure;
Figure 21 depicts a top view of the further optical layout;
Figure 22 depicts a compensation system usable in the flow cytometer of the present disclosure; and
Figure 23 discloses a user interface of the flow cytometer of present disclosure displaying example output.

### Detailed description

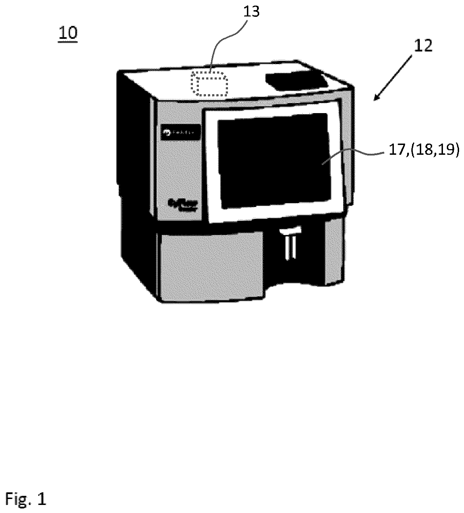

Figure 1 depicts a flow cytometer 10 of the present disclosure. Flow cytometer 10 applies light to individual particles flowing in a flow stream through an interrogation point of the cytometer, detects optical signals from these particles, and records the detected optical signals for analysis.

Flow cytometer 10 is provided with a main body 12 for acquiring a sample and performing measurement on the sample to obtain measurement results. Flow cytometer 10 is provided with a system controller 13, which is integrated within the main body 12, and which is capable of controlling the functions of flow cytometer 10 and performing analysis of the measurement results. System controller 13 is provided with an interface 17 having a display unit as an output unit 18 for output of information to a user and a touch-panel unit overlaid with the display as an input unit 19 for receiving information from the user.

Other forms of output unit, such as a printer or plotter, and other forms of input unit, such as a keyboard, mouse, keypad, or voice interface, may alternatively or equivalently be provided.

In an alternative configuration, system controller 13 may be separately provided as, for example, a personal computer or the like which is connected to main body 12 by a suitable interface such as Ethernet, IEEE1394 or USB.

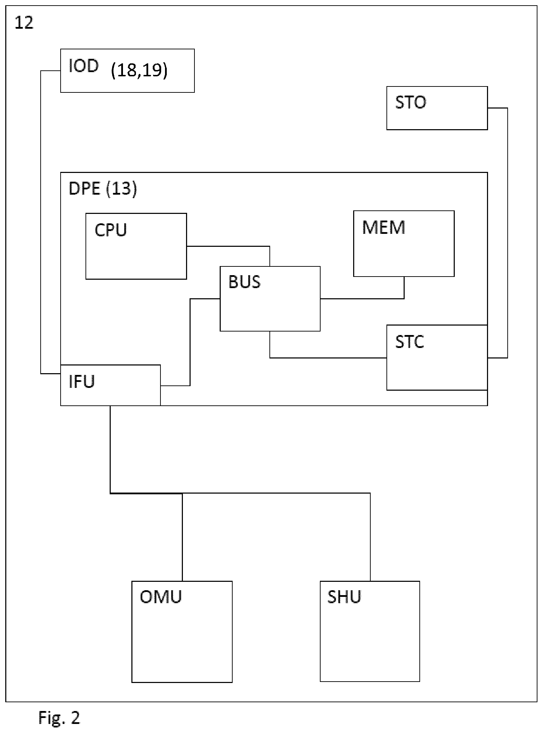

Figure 2 depicts a block diagram of the functional units of flow cytometer 10. As shown in Figure 2, the flow cytometer 10 is provided with data processing electronics DPE implementing system controller 13. Output unit 18 and input unit 19 together constitute input output device IOD.

Data processing electronics DPE implementing system controller 13 comprises, for example, a central processing unit CPU interfaced to a memory MEM, and storage controller STC via an interface bus BUS. Storage controller STC is interfaced to long term storage STO. Long term storage STO may be implanted as, for example, a hard disk drive or flash memory. Data processing electronics DPE also comprises interface unit IFU which provides an interface between the BUS and other functional units of the flow cytometer including an optical measurement unit OMU and a sample handling unit SHU.

Main body 12 is provided with an optical measurement unit OMU. Optical measurement unit OMU applies light to an interrogation point IP through which a sample flows and which receives light in one or more optical detection channels from the interrogation point IP. Main body 12 is provided with a sample handling unit SHU which loads a sample. Sample handling unit SHU causes the sample to flow through the interrogation point IP.

Interface unit IFU receives user commands from and provides user output to input output device IOD. Interface unit IFU also provides command information to and receives status information from optical measurement unit OMU and sample handling unit SHU. Interface unit IFU also receives measurement data information from optical measurement unit.

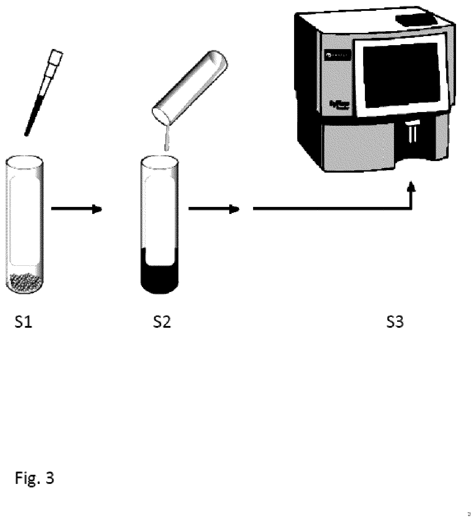

As shown in Figure 3, a liquid sample may be prepared for measurement by flow cytometer 10 by mixing, in a container, a raw sample such as blood with a marker such as CD4 mAb PE (step S1), incubating the sample and then adding to the container a buffer such as no lyse buffer to the mixture (step S2) and then loading the prepared sample into the flow cytometer 10 (step S3).

Sample handling unit SHU is configured to load the prepared sample. Sample handling unit SHU loads the prepared sample by drawing a defined quantity of the liquid sample from a container, for example by suctioning the sample by a suitable pump such as a syringe pump. Sample handling unit SHU is configured then to pass the sample in a controlled manner through the interrogation point, for example by switching the flow path of the sample using valves and reversing the operation of the pump.

In order for the sample to be optically accessible at an interrogation point, a flow cell, sometimes termed a flow cuvette, is used as part of the flow path of the sample. The flow cell forms part of the sample handling unit SHU. Such a flow cell is at least partially formed of an optically-transparent material which defines a flow channel through which the sample flows. An exemplary optically transparent material is an optical glass such as fused silica or an optical plastic such as acrylic (polymethylmethacrylate). For ease of manufacturing, the entire flow cell may be made of the optically-transparent material.

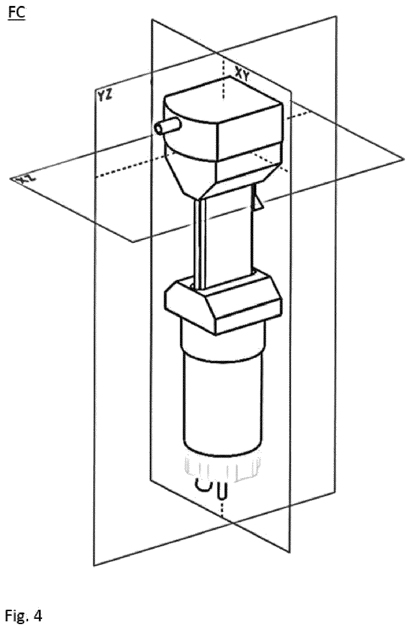

Such a flow cell FC is shown in Figure 4, together with XY, XZ and YZ planes which will be referred to in the following discussion of the optical configuration surrounding the flow cell FC**.** As shown, such a flow cell typically has at least the portion which is optically transparent having a generally rectangular cross-section in a plane crossing the flow-direction and also in two mutually-perpendicular planes normal to that plane.

After passing through the flow cell FC, the sample may be subjected to further measurement by optical and/or non-optical techniques, or may be directed to a waste container.

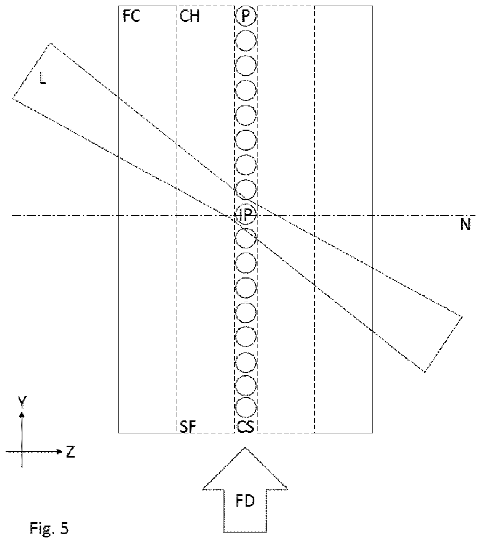

Figure 5 shows a schematic cross-section of a flow cell FC used in the flow cytometer of the present disclosure in the YZ plane. As shown in Figure 5, for flow cytometry, the flow cytometer 10, by means of the sample handling unit SHU, passes a fluid, termed the sheath fluid SF, in a flow direction FD through a flow channel CH formed in an optically transparent part of flow cell FC. Flow channel CH may be relatively narrow, for example, less than one millimetre in narrowest cross-sectional dimension. A sample containing particles P to be investigated is injected into a central region of the channel at slightly higher pressure than the pressure of the sheath fluid, such that hydrodynamic focusing causes the particles to align in an approximately single-line flow through the channel as a core stream CS.

Since the flow cell FC is optically-transparent, interrogation light L originating from the optical measurement unit OMU which is arranged outside the flow cell can be converged into a relatively small region of the channel CH, termed the interrogation point IP, such that at most a single particle P is present in the interrogation point IP at any time. Accordingly, individual irradiation of particles P by the interrogation light L may be achieved. Interrogation light L may be any light, but typically interrogation light is monochromatic light generated by, for example, a monochromatic light source LS such as a laser light source or a solid-state light source. For example, a 532 nm solid state laser may serve as a light source LS.

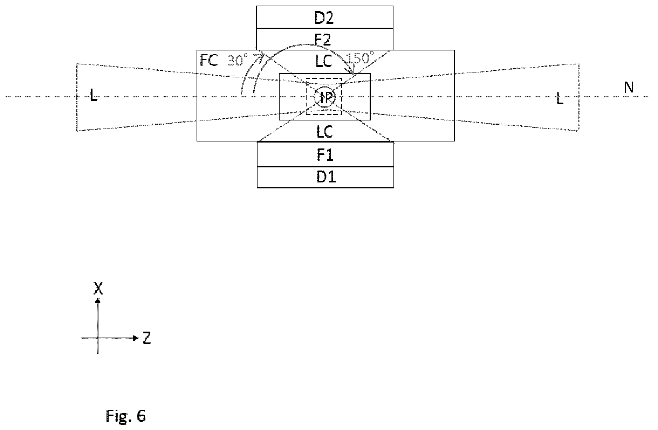

A particle P which is irradiated by interrogation light L may scatter or emit light in response to the irradiation. For example, where particle P contains a fluorescent substance, for example, where particle P has been labelled with a fluorescent dye, interrogation light L may excite the fluorescent substance and the fluorescent substance may emit fluorescence light in one or more wavelength bands in response. Also, particle P may scatter interrogation light L, for example by Rayleigh scattering or Mie scattering. Such light from particle P may be detected using a detection configuration as shown in Figure 6.

In Figure 6, which shows a schematic cross-section of the flow cell FC in the XZ plane passing through the interrogation point IP, the flow cell FC is provided with detectors D1 and D2 forming part of the optical measurement unit OMU. Detectors D1 and D2 have light-receiving surfaces at which light may be received and a corresponding measurement signal generated. The measurement signal may, for example, be proportional to the incident intensity or number of photons received at detectors D1 and D2 during a measurement period.

In Figure 6, the detection arrangement is lens less, in other words that no element with optical power is arranged between the flow cell FC and each of the detectors D1 and D2. In particular, no objective lens or converging lens is provided. By such a configuration, light diverging from the interrogation point IP may be received at the detectors D1 and D2.

In the configuration of Figure 6, detectors D1 and D2 are arranged adjacent to the flow cell on either side of the flow cell FC in a direction perpendicular to the incidence direction of the interrogation light L, and each facing the other across the interrogation point IP. Detectors D1 and D2 form part of the optical measurement unit OMU. Thereby, even high numerical aperture light originating from a particle present at interrogation point IP and travelling in a light cone LC may be detected by detectors D1 and D2.

Detectors D1 and D2 may be, for example, photon detectors such as planar solid-state photomultiplier detectors with light-receiving surfaces having a size of, for example, at least 3 mm x 3 mm, at least 6 mm x 6 mm or at least 10 mm x 10 mm. In some configurations, detectors D1 and D2 may have a ratio of flow cell channel width to detector edge length of at least 1:40.

Each of detectors D1 and D2 may be provided with filters F1 and F2 to exclude from detection light any light which is not in a wavelength range for detection. For example, where detector D1 or D2 is intended to detect fluorescence light emitted at a fluorescence wavelength from a particle at the interrogation point IP, filter F1 or F2 may be a band-pass filter which transmits light including the wavelength of the fluorescent light but which blocks light of other wavelengths including the interrogation light L. Similarly, where detector D1 or D2 is intended to detect scattered light from a particle at interrogation point IP, filter F1 or F2 may be a band-pass filter corresponding to the wavelength of the interrogation light.

Of course, other filtering arrangements are possible, and filters such as long-pass and short-pass filters may appropriately be selected depending on the optical phenomena to be detected. Suitable filters may, for example, be coloured glass filters OG550 and RG610 filters, depending on application. Where it is necessary to exclude the interrogation light L from a detector, the detector or an associated filter can be provided with an interference coating having a blocking wavelength corresponding to a wavelength of the interrogation light L.

Such detectors and/or the interposed filters may be arranged close to the adjacent wall of flow cell FC, or may be arranged in contact with the adjacent wall of the flow cell FC, optionally with a thin film of an optical coupling medium such as an optical adhesive filling any gap between adjacent surfaces. In the disclosed configuration, a light-receiving surface of the detectors D1 and D2 is arranged along each of the walls of flow cell FC which oppose one another across the incidence direction.

In Figure 6, a cross-section in the XZ plane perpendicular to the flow direction FD of a light cone LC of light emitted from the interrogation point IP is shown. Light cone LC has a centre direction perpendicular to the flow direction FD and perpendicular to the incidence direction of light L at the interrogation point. In this example, the light cone has a light cone angle of 120 degrees, and so extends in angular range in the XZ plane between 30 degrees and 150 degrees to the incidence direction. If the light cone is symmetrical, light cone LC extends in angular range 30 degrees and 150 degrees to the incidence direction in all planes containing the centre direction. Hence, the light cone also extends in angular range between 30 degrees and 150 degrees to the projection of the incidence direction of the incident light into the XZ plane. In other implementations, for example, the light cone may be assumed to have a narrower or broader light cone angle of, for example, 90 degrees or 60 degrees.

In Figure 6, the light-receiving surface of each detector D1 and D2 extends across this light cone, such that all light emitted from the interrogation point into this light cone is received at light-receiving surface of detectors D1 and D2. This is achieved by, for example, arranging that the light receiving surfaces of detectors D1 and D2 extend, in the XZ plane, so as to have a length which captures all light emitted in that plane from the interrogation point IP at angles within the light cone.

However, in other configurations, it may be sufficient that the light-receiving surfaces of detectors D1 and D2 only partially extend across this light cone. In some configurations, the light receiving surfaces of detectors D1 and D2 may have a length in the XZ plane extending across at least 25%, at least 50% or at least 75% by angle of the light cone at each side. In some configurations, the light receiving surfaces of detectors D1 and D2 may have a length in another plane containing the incidence direction of the interrogation light L at the interrogation point extending across at least 25%, at least 50% or at least 75% by angle of the light cone at each side.

By the configuration shown in Figure 6, two detection channels are provided, which may, depending on the characteristics of detectors D1 and D2, and of filters F1 and F2, detect two different optical phenomena originating from interrogation point IP. Alternatively, detectors D1 and D2 as well as filters F1 and F2 may be similar. In such a configuration, improved signal-to-noise may be attained by measuring the same optical phenomenon with two independent optical detection channels.

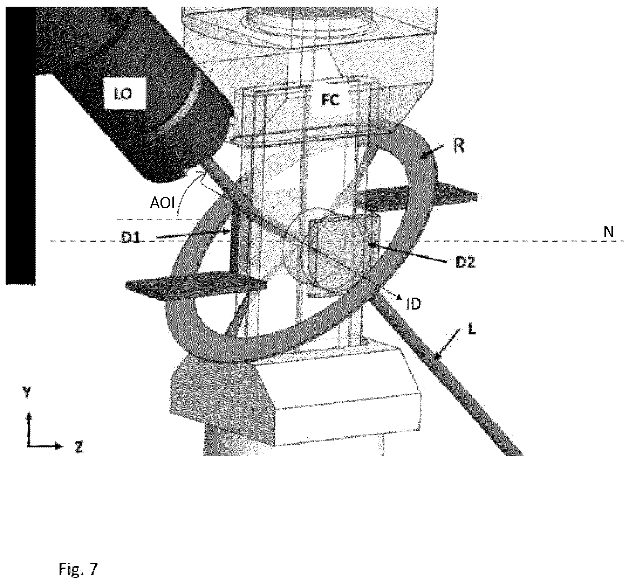

Figure 7 shows an optical configuration adopted as part of the optical measurement system OMU in the present disclosure. Interrogation light L is applied to the flow cell at an incidence angle which is inclined to a normal direction N with respect to the flow direction FD of the particles P through the flow channel FC. Accordingly, the interrogation light is applied to the interrogation point at an incidence angle which is inclined to a normal direction N with respect to the flow direction FD. In Figure 7, the interrogation light L is introduced by means of optical unit LO which serves to focus and direct the interrogation light L originating from light source in optical unit LS (not shown). In addition to a light source, optical unit LO may, for example, contain beamforming optics for adjusting the cross-sectional shape of the beam and/or focussing optics for adjusting the convergence of the beam. Optical unit LO may also contain, for example, polarisation-adjusting optics such as a polariser, a quarter-wave plate or a half-wave plate to select or rotate polarisation of the interrogation light L. In some configurations, a light source may be provided separately to optical unit LO and light from the light source may be passed through optical unit LO to reach interrogation point IP.

In Figure 7, it can be seen that, due to refraction at exterior surfaces of flow cell FC, the angle of incidence of the interrogation light L to a normal N to the flow direction FD changes as the interrogation light traverses the cell. Similarly, due to refraction at interior surfaces of flow cell FC, the angle of incidence of the interrogation light L to a normal N to the flow direction FD changes as the interrogation light traverses the flow channel FC. However, in the configuration shown in Figure 7, the angle of incidence of the light is always inclined to the normal to the flow direction.

Since the incidence direction ID of interrogation light L is set to be inclined to the normal direction, it is possible to detect light originating from interrogation point IP across a large detection range R around and adjacent to flow cell FC. In the configuration of Fig. 7, it is possible to detect light originating from interrogation point IP at a full 360-degree range around interrogation point IP in directions perpendicular to an incidence direction ID of the interrogation light L at the interrogation point IP. Accordingly, by applying the interrogation light to the flow cell at an inclined angle of incidence AOI, such that the interrogation light has an inclined incidence angle at the interrogation point IP, it becomes possible to arrange detectors at positions other than on opposite sides of the flow cell as described above in connection with Figure 6.

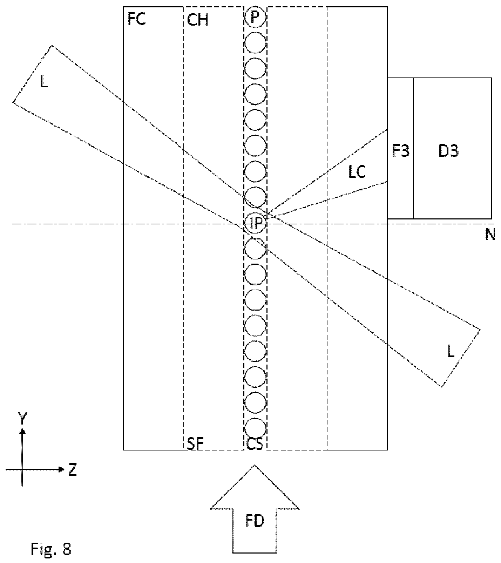

For example, as shown in Figure 8, with an inclined incidence angle of interrogation light L at the interrogation point IP, light which is emitted in a light cone LC away from a travelling direction of interrogation light L but in the plane of both the interrogation light L and the flow direction FD of particles P through the interrogation point IP may also be detected by a further detector D3, where appropriate with an interposed filter F3, arranged adjacent or in contact with to a wall of flow cell FC through which interrogation light L exits, having passed through interrogation point IP.

Similar to detectors D1 and D2, detector D3 may have a light-receiving surface at which light may be received and a corresponding measurement signal generated. Similar to detectors D1 and D2, the measurement signal may, for example, be proportional to the incident intensity or number of photons received at detectors D1 and D2 during a measurement period. Similar to detectors D1 and D2, D3 may be, for example, a photon detector such as a planar solid-state photomultiplier detector. Such a detector and/or the interposed filter may again be arranged close to the wall of flow cell FC, or may be arranged in contact with the wall of the flow cell, optionally with a thin film of an optical coupling medium such as an optical adhesive filling any gap between adjacent surfaces.

Similar to detectors D1 and D2, in Figure 8, the detection arrangement is lens less, in other words that no element with optical power is arranged between the flow cell FC and detector D3. In particular, no objective lens or converging lens is provided. By such a configuration, light diverging from the interrogation point IP may be received at the detector D3.

By adopting the configuration shown in, for example, Figure 8, it is possible to include three different detection channels, which may measure three distinct optical phenomena. In one configuration, by appropriate selection of filter F1, detector D1 may be configured to detect a first fluorescent signal at a first fluorescent wavelength, by appropriate selection of filter F2, detector D2 may be configured to detect a second fluorescent signal at a second, different fluorescent wavelength, and by absence of filter F3, detector D3 may be configured to detect scattered interrogation light. In other configurations, each of detectors D1, D2, or D3 may be configured to detect, for example, either scattered light or fluorescent light, or light originating from another optical process. By such a configuration, three distinct optical phenomena may be measured in a compact configuration with good signal-to-noise ratio.

By adjusting the angle of incidence of interrogation light L to flow cell FC and/or to the interrogation point IP with respect to the flow direction FD of the particles P in the core stream CS, further advantageous effects may be attained.

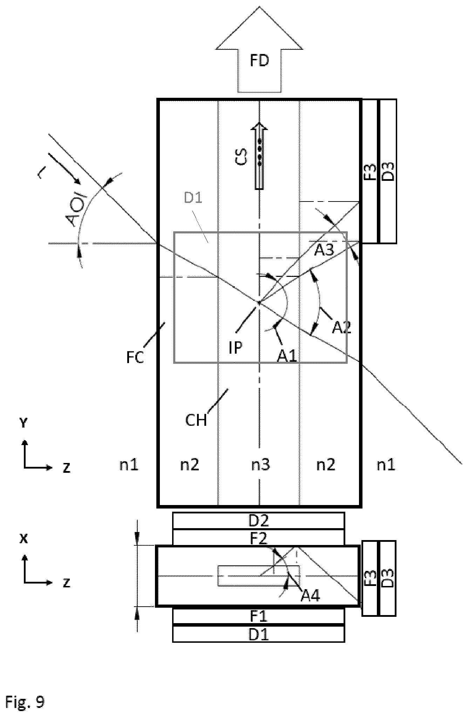

For example, Figure 9, which depicts a cross-section of flow cell FC in both the YZ plane and the XZ plane. As shown in Figure 9, the flow cytometer comprises two fluorescence detectors D1, D2 and a scattered light detector D3. The fluorescence detectors D1, D2 are located in the same height as the height of the interrogation point IP and the scattered light detector D3 is located at a higher position than the height of the interrogation point IP. In the example of Figure 9, the medium surrounding flow cell FC may be, for example, a gas such as air having refractive index n1, the material of flow cell FC may, for example, be an optical glass such as fused silica or an optical plastic such as acrylic (polymethylmethacrylate) with a second refractive index n2, and the sheath fluid may be a liquid such as water or saline with a third refractive index n3.

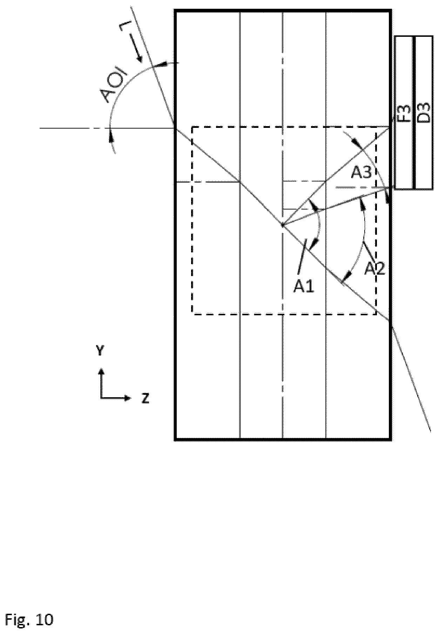

Under such conditions, the cone of light from interrogation point IP has an angular range A3 defined between a maximum angle A1, which is limited by total internal reflection (TIR) of light at the n1/n2 interface, and a minimum angle A2, which is determined by the physics of the emission process, and is typically 65 degrees for scattered light. As angle of incidence AOI increases, the maximum angle A1 of angular range A3 increases while angle A2 is unchanged, as shown in Figure 10. Accordingly, by increasing the angle of incidence AOI of the interrogation light L relative to the normal to the flow direction FD through the interrogation point IP, the fraction of the emitted light cone which can be received at detector D3 may be increased.

To allow for increased signal-to-noise, a light-receiving surface of detector D3 may have extent in the plane containing the flow direction FD and the incident direction of interrogation light L so as to capture all or a substantial proportion of the cone of light having the angular range A3 shown in Figure 9. However, in other configurations, the light-receiving surface of detector D3 may extend only partially across this range. For example, the light-receiving emitted from interrogation point IP. In Fig. 9, the light-receiving surface of detector D3 may extend across at least 25%, at least 50%, or at least 75%, of the angular range A3 shown in Figure 9.

Having reference again to Figure 9, even though detector D3 is separated further from the interrogation point IP in the XZ plane when compared with detectors D1 and D2, since part of the light cone of light emitted from interrogation point IP will be subject to total internal reflection in the XZ plane at each of the opposed side walls of flow cell FC which face each other across the incidence direction, a substantial proportion of the emitted light may be captured by detector D3. In contrast, light which is emitted towards detectors D1 and D2 and which is subject to total internal reflection at the opposed side walls at which detectors D1 and D2 are arranged will typically be lost.

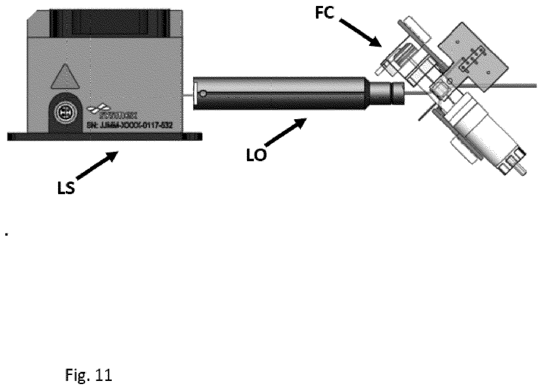

The above explanations have been given with respect to an incidence direction of the interrogation light which is tilted relative to the normal to the flow direction of the particles P through the flow cell FC. However, as shown in Figure 11, is equivalently possible to tilt flow cell FC relative to the incident direction of the interrogation light LS. A situation in which both flow cell FC and the incidence direction of interrogation light L are tilted is also possible within the scope of the present disclosure.

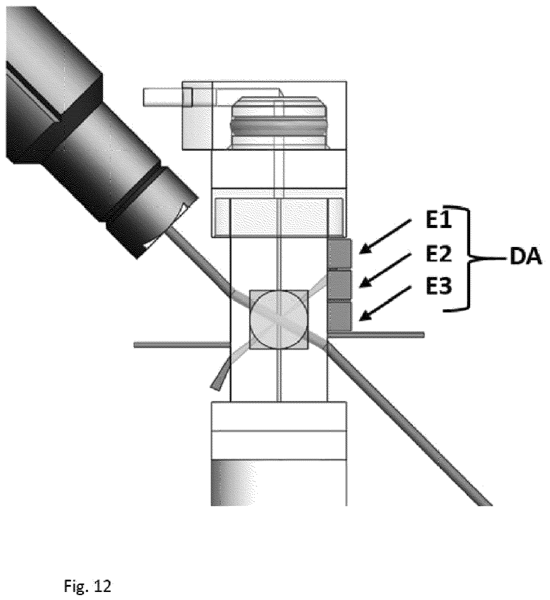

In a variant configuration, as shown in Figure 12, one or more of the detectors DA, here shown in the position of detector D3 of Figure 8, may be segmented in a direction in a plane containing the interrogation light to provide different detection regions at different angular positions relative to a normal to interrogation light L. In Figure 12, for example, detector DA has three detection regions E1, E2 and E3 which each provide a signal based on light from interrogation point IP which is incident to each detection region. By comparing the intensity of emitted light at each portion E1, E2 or E3 of detector DA, a quantity of light emitted into different angular regions around the interrogation point IP can be determined.

In the configuration shown in Figure 12, detector E1 provides a signal corresponding to large-angle light, detector E2 provides a single corresponding to medium-angle light, and detector E3 provides a signal corresponding to small-angle light. The signals from each of detectors E1, E2 and E3 may be summed, for example to provide an overall quantity of light with good signal-to-noise. In the case of detectors D1 and D2, segmenting the detectors similarly allows an angular distribution of light collected by these detectors to be measured.

In an alternative configuration, the detector may be segmented in a direction in a plane crossing the plane containing the interrogation light, for example to measure the angular distribution of light in that direction.

In the configuration discussed above, it is been assumed that the flow cell has a generally rectangular cross-section in a plane crossing the flow-direction and also in two mutually-perpendicular planes normal to that plane. In other words, the flow cell has been described as having a generally rectangular form. With such a configuration, when the incident interrogation light L strikes the interface n1/n2 between the surrounding medium and the material of the flow cell FC, reflections may occur. Similarly, when the incident interrogation light L strikes the interface n2/n3 between the material of the flow cell FC and the material of the sheath fluid SH, reflections may occur. These reflections may give rise to stray light, which will tend to reduce signal to noise at the detectors.

However, in appropriate configurations, it is possible to select the angle of incidence of the incident light to the flow cell FC such that reflections can be minimised.

This can be realized adopting a polarisation state of interrogation light L which is p-polarised, that is, having an electric field direction parallel to the plane of incidence. Such a polarisation state can be attained, for example, by using a polarised light source or passing the interrogation light through a polariser before being incident to the flow cell FC.

For example, it is possible to introduce the interrogation light L to flow cell FC so that the angle of incidence of the interrogation light at either or both of the interface between the surrounding medium and the material of the flow cell FC and the interface between the material of the flow cell FC and the material of the sheath fluid SH is close to or at Brewster's angle, such that reflections are reduced or eliminated. Preferably, at one or more of the interfaces, preferably each of the interfaces, the interrogation light passes the interface at an angular range within plus or minus 25% of Brewster's angle at the interface, plus or minus 20% of Brewster's angle, plus or minus 10% of Brewster's angle, or plus or minus 5% of Brewster's angle.

For example, one exemplary configuration may have interrogation light L of wavelength 520 nm, a flow cell formed of fused silica having refractive index n2 of 1.461, surrounded by air having refractive index n1 of 1.0003. In the exemplary configuration, a sheath fluid such as water may be used having refractive index n3 of 1.334. Under such circumstances, Brewster's angle at the air-silica interface at an exterior of the flow cell is about 55.6 degrees and Brewster's angle at the silica-water interface at an interior of the flow cell is about 42.4 degrees.

In this exemplary configuration, taking into account the geometry shown in Fig. 9, and the refraction of the interrogation light L at each interface, applying the interrogation light to the flow cell such that it has an angle of incidence AOI as shown in Figure 9 at the surface of the flow cell of around 70 degrees to the normal to flow direction FD, for example between 45 degrees and 80 degrees, or between 62 degrees and 80 degrees, will exhibit significantly reduced reflection for p-polarized light at at least the silica-water interface as compared with applying light at a normal or near-normal angle.

For example, at an incidence angle AOI of 45 degrees, a reduction in reflection of the interrogation light occurs, but a significant proportion of scattered or emitted light at an angle normal to the interrogation light is totally internally reflected. At an incidence angle AOI of 62 degrees, a further reduction in reflection of the interrogation light occurs, and a smaller amount of scattered or emitted light is totally internally reflected. At an incidence angle AOI of 70 degrees, reflections at the exterior of the flow cell FC start to increase, but reflections at the interior of the flow cell further decrease. At an incidence angle AOI of 80 degrees, reflections at the interior of the flow cell are minimised, but reflection at the exterior of the flow cell are further increased. Accordingly, appropriate adjustment of the angle of incidence may be made to attain an appropriate reflection performance.

A further improvement can be achieved, for example, by adopting a configuration of flow cell in which the channel CH carrying the sheath fluid SH and the core stream CS in the flow direction FD is not parallel to the side walls of the cuvette through which the interrogation light L is either incident to the cell or exits the cell.

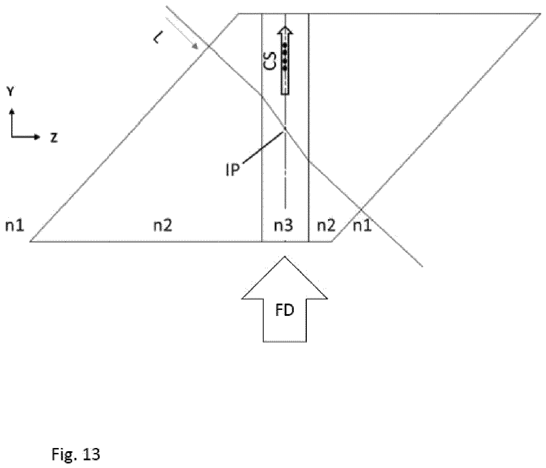

For example, as shown in Figure 13, the flow cell FC may be provided to have incidence and/or exit surfaces which are inclined to the flow direction FD through the flow cell FC, such that the flow direction FD is inclined towards or away from the incidence or exit surfaces. Thereby, the angle of incidence of interrogation light L at the interfaces n2/n3 at the side surfaces of the flow channel FC of the flow cell FC may be made closer to or to correspond to Brewster's angle at either or both of those surfaces, such that reflection may be reduced at some or all interfaces.

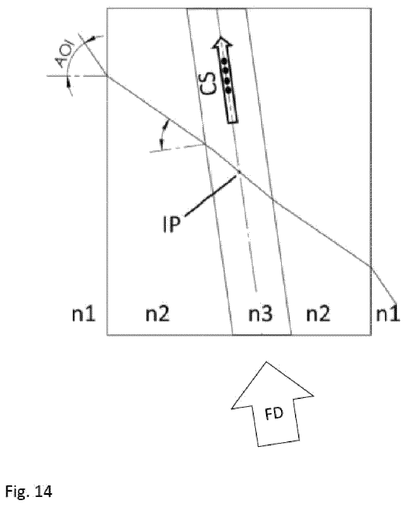

Figure 14 shows an alternative configuration applying a similar concept to that of Figure 13, except that the angle of incidence of the interrogation light at the interfaces n1/n2 incident to and exiting the flow cell FC is also adapted to be closer to or to correspond to Brewster's angle. By adapting the structure of flow cell FC as shown in Figures 13 or 14, further reductions in reflections of the interrogation light L may be achieved.

In other configurations, similar to the configuration shown in Figure 13, the inclination of the flow direction FD towards or away from the incidence or exit surfaces may even be such that the angle of incidence of the interrogation light L at the surface of the flow cell FC is close to normal to the flow direction or substantially normal to the flow direction, but, due to refraction, the interrogation light L is nevertheless inclined to the normal to the flow direction at the interrogation point.

As explained above in connection with Figure 9, the range of light which may be captured by detector such as D3 arranged in the plane of interrogation light L may be limited by total internal reflection on the exit surface of flow cell FC. To reduce the effects of total internal reflection, the exit surface of flow cell FC may be adapted to reduce the angle of incidence between the light from interrogation point IP and the exit surface of the flow cell FC.

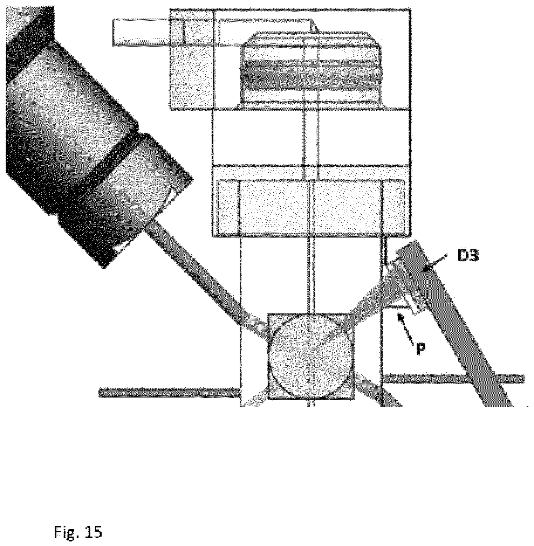

For example, as shown in Figure 15, a prism P having mutually-inclined entrance and exit surfaces may be arranged between the exit surface of flow cell FC and detector D3 such that the entrance surface of detector D3 is made substantially perpendicular to a line passing through interrogation point IP. Prism P may be made of the same material or a material having a similar or the same refractive index to that of flow cell FC and may be adhered to flow cell FC and detector D3 by, for example, an optical adhesive. In an alternative configuration, an exit surface of flow cuvette FC against which the detector D3 is arranged may be angled, or prism P may be integrally formed with flow cuvette FC.

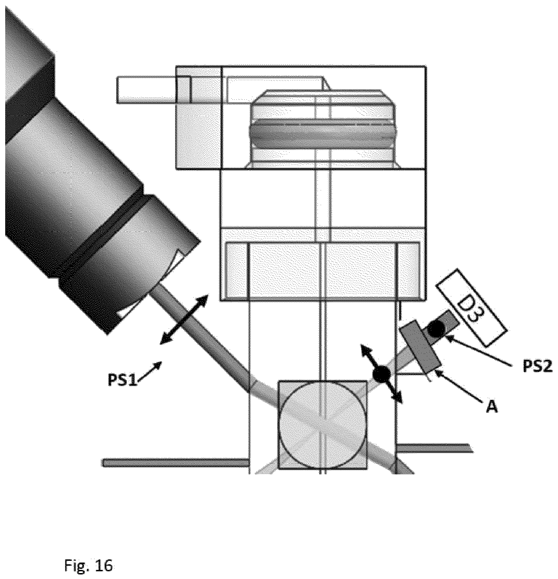

As explained above in connection with Figures 13 and 14, interrogation light L which reflects off internal surfaces of flow cell FC may give rise to stray light and associated undesired background signals. In configurations in which adaption of the incidents angle to be close to the Brewster's angle is not adopted, or where such adaption is only partly performed, it is possible to suppress the influence of reflected interrogation light L additionally by adopting a configuration as shown in Figure 16.

In the configuration of Figure 16, a polarisation filter such as a polarisation analyser may be arranged between flow cell FC and detector D3 so as to block the transmission of light which arises from reflections at interfaces within the flow cell FC. For example, where the incident interrogation light is polarised linearly, for example in a polarisation state, the reflected light will also be polarised linearly in the same polarisation state. However, emitted or scattered light from the interrogation point IP may include a range of polarisation states. Therefore, blocking light in the polarisation state of the incident light from reaching detector D3 can therefore exclude the influence of reflected light on the detected signal.

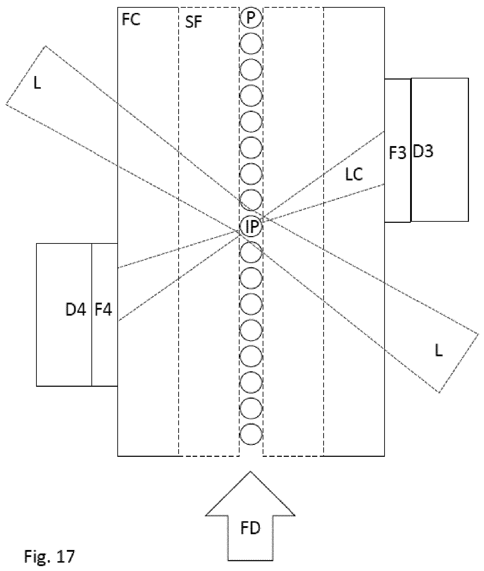

The above explanations have been made with respect to a configuration which can provide an additional detection channel to orthogonally-arranged detectors D1 and D2, by arranging detector capital D3 at or adjacent to an exit side of flow cell FC away from the path of tilted interrogation light L. However, tilted angle of incidence of interrogation light L also allows the provision of an alternative or additional further detection to channel be arranged at or adjacent to a light-entrance side of flow cell FC as shown in Figure 17.

In the configuration of Figure 17, additional detector D4 together with additional associated filter F4 is arranged at the side of flow cell FC at which interrogation light L enters. Whereas detector D3 is arranged on one side of interrogation light L in the plane containing the incidence direction of the interrogation light L and the flow direction FD of the particles P, additional detector D for is arranged on the other side of interrogation light L in the plane containing the incidence direction of the interrogation light L and the flow direction FD of the particles P. By such a configuration, four channels of detection of different optical phenomena may be provided.

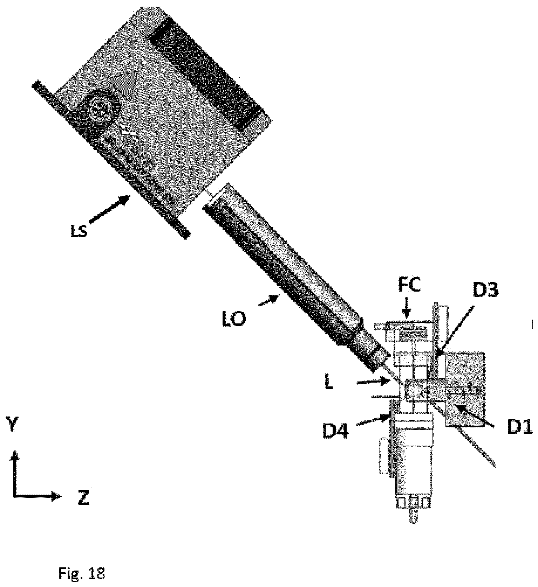

One optical configuration for implementing such a four-channel detection configuration is shown in Figure 18, in which, for example, detectors D1, D2 and D4 are arranged to detect three distinct fluorescence wavelengths, while detector D3 is provided to detect side scattered light. However, the configuration is not limited to 4 channels, and depending on the construction of flow cell FC, further detectors may be provided.

In principle, the optical configuration could be adapted for flow cells with a circular or elliptical instead of a polygonal footprint to allow for further accessibility for spatial arrangement of multiple detection channels.

In one configuration, for example, rather than a flow cell FC having a rectangular cross-section as shown in Figure 7, a flow cell FC having a polygonal cross-section such as a hexagonal, octagonal, or decagonal cross-section could be provided, such that six, eight or even ten detection channels could be provided arranged around interrogation point IP.

Although the above explanations have been made with respect to a configuration which arranges detectors away from the optical path of interrogation light L, for example to detect fluorescent light and so-called side scattered light, it is also possible to detect light from interrogation point IP which travels close to a direction along the path of interrogation light L, which is so-called forward scattered light.

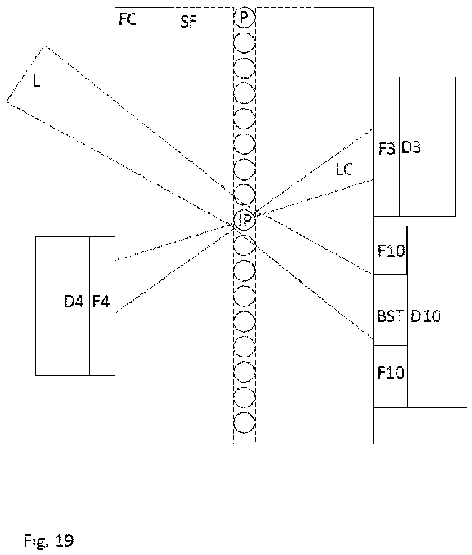

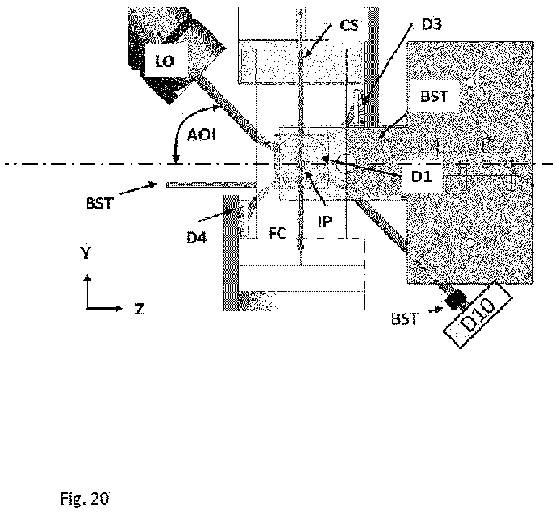

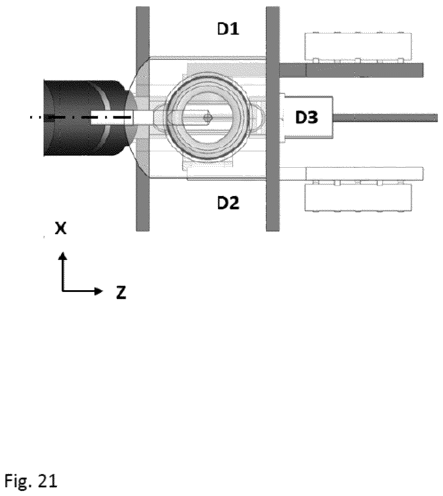

As shown in Figure 19, another detector D10 can be arranged in the path of interrogation light L. Detector D10 has a planar light-receiving surface having an interposed beam-stop portion BST arranged to cover a central region of the light-receiving surface of detector D10 to block light travelling along the path of interrogation light L. A transparent portion is, for example, arranged around the beam-stop portion BST to allow forward-scattered light to reach detector D10. Beam-stop portion BST may, for example, be an absorptive or reflective portion at the wavelength of the interrogation light. Associated filters F10 may also be interposed between the side wall of the flow cell FC and detector D10. Such a configuration shown in more detail in, for example, Figures 20 and 21, which show also the arrangements of further beam stops BST to exclude reflected interrogation light L from reaching detectors D3 and D4.

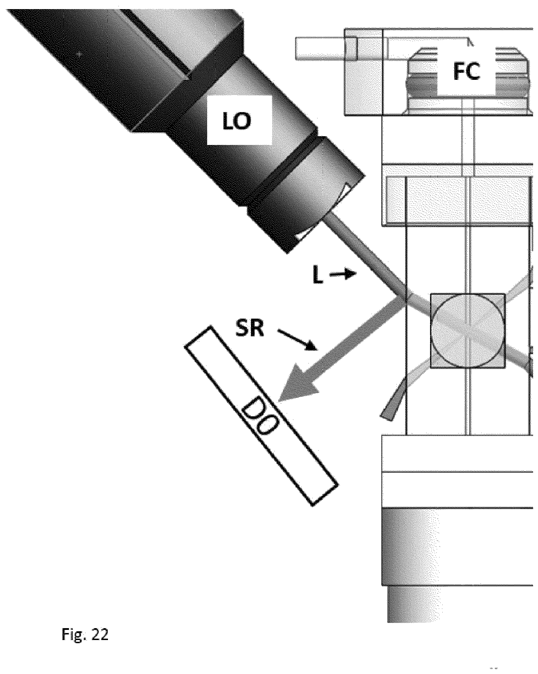

In a further variant configuration shown in Fig. 22, a further detector D0 may be provided arranged at a light-incident side of flow cell FC to receive interrogation light L reflected from the incident surface of flow cell FC. The ratio of a surface-reflected portion SR2 of interrogation light L to the remaining transmitted portion of interrogation light L will be constant. Therefore, the signal from detector D0 may be used to provide a reference measurement of the intensity of interrogation light L and accordingly to compensate for variations in output of interrogation light L from light source LS over time. If detector D0 is of the same type of detector as, for example, detectors D1 to D10, D0 will respond to incident light in a similar way to detectors D1 to D10 including properties which depend on a common ambient temperature condition for example the detector gain. So, in one configuration, the signals from each of detectors D1 to D10 may be scaled by the signal from detector D0, or the signal from detector D0 may be recorded along with the signals from detectors D1 to D10 to allow for such scaling during an analysis procedure. In both cases, instabilities of the optical output power from the light source and instabilities of the employed detectors will be recorded by the reference detector and can be used to scale D1 to D10 for more accurate flow cytometric measurements.

In another configuration, the signal from detector D0 may be fed back to a light-source controller of optical measurement unit OMU to regulate the output intensity of light source LS. Such control may be by any suitable feedback or feed-forward control strategy, such as a Proportional-Integral-Derivative (PID) or other similar strategy.

Thereby, more accurate measurement of the absolute intensities of the detected light at each detector may be obtained, even taking into account laser fluctuations due for example to day-to-day temperature changes and longer-term drift due for example to degradation of the light source LS or interrogation optics LS. By adopting such a configuration, the design of light source LS may be made simpler, as there is no need to provide stabilising or monitoring elements.

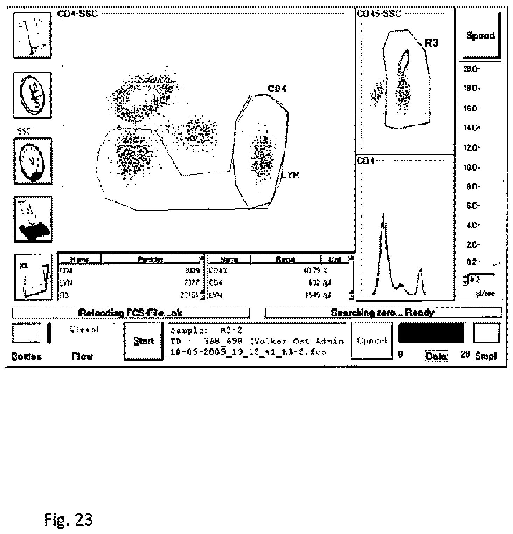

By implementing the above-disclosed configurations, it may be possible to provide a flow cytometer which can provide multiple detection channels with good signal-to-noise in a compact configuration. Such a cytometer may have applications in advanced cytometry applications, in which particles are classified based on their optical response to the interrogation light by several different optical phenomena. For example, particles may be classified, as shown in Figure 23, into clusters based on fluorescent and scattering response. By increasing the number of detection channels, particles with different characteristics may be discriminated, and an improved understanding of the sample may thereby be obtained.

The foregoing disclosure is to be being understood purely to be exemplary and illustrative of the principles and essential features of the disclosure. Substitution or variation of materials and mechanisms among those known to one skilled in the art is contemplated without affecting the essential principles of the configurations herein disclosed and their associated effects and advantages.

## Claims

1. A flow cytometer (10), comprising:
a flow cell (FC) defining a flow channel (CH) for flowing a liquid (SF) containing a particle (P) through the flow cell;
a light source (LS) arranged to emit light (L) to the particle flowing through the channel, the light being incident to the particle at an incidence angle inclined to a normal direction with respect to a flow direction (FD) of the particle through the channel; and
a plurality of light detectors (D1, D2), each having a light-receiving surface at which light may be received and a corresponding measurement signal generated, arranged around the flow cell,
**characterised in that** the plurality of light detectors are arranged for receiving at each light receiving surface light diverging from the particle in a lens less detection arrangement.

2. The flow cytometer of claim 1, wherein
the plurality of light detectors are arranged around a light path from the light source with respect to a point at which the light is incident to the particle in the channel.

3. The flow cytometer of claim 1 or 2, wherein
the plurality of light detectors comprises a scattered light detector (D3) that is arranged to detect a scattered light that is scattered by the particle in a direction intersecting a light path from the light source, the scattered light detector arranged at an opposite side of the flow cell with respect to the incident side of the light and away from a light path of unscattered light from the light source.

4. The flow cytometer of claim 3, wherein a scattered light detector is located in a plane including an incidence direction of the light to the particle and the flow direction of the particle.

5. The flow cytometer of claim 3 or 4, wherein
the scattered light detector has a light-receiving surface which is arranged to receive light scattered by the particle at an angle of between 65 degrees and a TIR angle with respect to the incidence angle of the light from the light source, the light-receiving surface optionally being arranged to extend across at least 50% of an angular range extending between 65 degrees and the TIR angle with respect to the incidence angle of the light from the light source at the particle, the TIR angle being an angle at which light scattered by the particle is totally internally reflected at the opposite side of the flow cell with respect to the incident side of the light.

6. The flow cytometer of any one of claims 1 to 5, wherein the plurality of light detectors comprises a fluorescence detector (D1, D2) having a light-receiving surface arranged to detect fluorescent light from the particle.

7. The flow cytometer of claim 6, wherein
the light-receiving surface of the fluorescence detector is arranged parallel to the light path from the light source.

8. The flow cytometer of claim 6 or 7, wherein
the light-receiving surface of the fluorescence detector is arranged along a first outer surface of the flow cell, and the plurality of light detectors comprises another fluorescence detector having a light-receiving surface that is arranged along a second outer surface opposite to the first outer surface, the light-receiving surfaces optionally extending across at least 25% of an angular range of a light cone extending between 30 and 150 degrees with respect to the incidence direction of the light from the light source at the particle.

9. The flow cytometer of any one of claims 1 to 8, wherein the plurality of light detectors comprises at least three detectors (D1, D2, D3) that are arranged in three different directions.

10. The flow cytometer of claim 9, wherein
the plurality of light detectors comprises at least two fluorescence detectors (D1, D2) and at least one scattered light detector (D3).

11. The flow cytometer of claim 10, wherein
the at least two fluorescence detectors are located in a first height including a first position with respect to the flow direction of the particle and the scattered light detector is located in a second height including a second position which is different from the first position with respect to the flow direction of the particle.

12. The flow cytometer of claim 11, wherein
the first height is at the same height as a point at which the light is incident to the particle in the channel.

13. The flow cytometer of any one of claims 1 to 12, further comprising
a reference detector (D0) arranged to detect a light from the light source that is reflected by an outer surface of the flow cell; and
a controller (OMU) configured to adjust an output from at least one of the light source and the plurality of the detectors based on the light detected by the reference detector.

14. The flow cytometer of any one of claims 1 to 13, wherein the light source is arranged so that:
light from the light source is incident on the flow channel at an angle corresponding substantially to Brewster's angle at outer surface of the flow channel; and/or
light from the light source is incident on the flow channel at an angle corresponding substantially to Brewster's angle at an inner surface of the flow channel.

15. The flow cytometer of any one of claims 1 to 14, wherein the flow cell has a rectangular cross-section in a plane crossing the flow direction.

16. The flow cytometer of any one of claims 1 to 15, wherein each of the plurality of light detectors is bonded to or in contact with surfaces of the flow cell.

17. The flow cytometer of any one of claims 1 to 16, wherein the angle of incidence is between 45° and 80°at incidence to the flow cell.

18. The flow cytometer of any one of claims 1 to 17, wherein the light is p-polarised at incidence to the flow cell.

19. The flow cytometer of any one of claims 1 to 18, wherein at least one of the plurality of light detectors is a planar solid state detector.

20. The flow cytometer of claim 19, wherein at least one of the plurality of light detectors is a segmented detector.

21. The flow cytometer of any one of claims 1 to 20, comprising a polarisation-selective element arranged between the flow cell and at least one of the plurality of light detectors.

22. The flow cytometer of any one of claims 1 to 21, further comprising a prism element arranged between the flow cell and at least one of the plurality of light detectors.

23. The flow cytometer of any one of claims 1 to 22, wherein each of the plurality of light detectors are arranged around the flow cell without a lens therebetween.

24. A method of flow cytometry, comprising:
flowing a liquid (SF) containing a particle (P) through a flow channel (CH) defined in a flow cell (FC);
emitting light from a light source (LS) to the particle flowing through the channel, the light being incident to the particle at an incidence angle inclined to a normal direction with respect to a flow direction of the particle through the channel; and
receiving light from the particle by a plurality of light detectors (D1, D2) , each having a light-receiving surface at which light may be received and a corresponding measurement signal generated, arranged around the flow cell,
the method being **characterised in that** the plurality of light detectors are arranged for receiving at each light receiving surface light diverging from the particle in a lens less detection arrangement

## Patentansprüche

1. Durchflusszytometer (10), umfassend:
eine Durchflusszelle (FC), die einen Durchflusskanal (CH) definiert, um eine Flüssigkeit (SF), die ein Partikel (P) enthält, durch die Durchflusszelle fließen zu lassen;
eine Lichtquelle (LS), die angeordnet ist, um Licht (L) auf das durch den Kanal fließende Partikel zu emittieren, wobei das Licht unter einem Einfallswinkel auf das Partikel trifft, der in Bezug auf eine Durchflussrichtung (FD) des Partikels durch den Kanal gegenüber der Normalen geneigt ist; und
eine Vielzahl von Lichtdetektoren (D1, D2), die jeweils eine Lichtempfangsfläche aufweisen, an der Licht empfangen und ein entsprechendes Messsignal erzeugt werden kann, die um die Durchflusszelle herum angeordnet sind,
**dadurch gekennzeichnet, dass** die Vielzahl von Lichtdetektoren angeordnet ist, um an jeder Lichtempfangsfläche Licht zu empfangen, das von dem Partikel in einer linsenlosen Detektionsanordnung divergiert.

2. Durchflusszytometer nach Anspruch 1, wobei
die Vielzahl der Lichtdetektoren um einen Lichtweg von der Lichtquelle in Bezug auf einen Punkt angeordnet ist, an dem das Licht auf das Partikel im Kanal trifft.

3. Durchflusszytometer nach Anspruch 1 oder 2, wobei die Vielzahl von Lichtdetektoren einen Streulichtdetektor (D3) umfasst, der angeordnet ist, um ein Streulicht zu erfassen, das von dem Partikel in einer Richtung gestreut wird, die einen Lichtweg von der Lichtquelle schneidet, wobei der Streulichtdetektor auf der gegenüberliegenden Seite der Durchflusszelle in Bezug auf die Einfallsseite des Lichts und entfernt von einem Lichtweg des nicht gestreuten Lichts von der Lichtquelle angeordnet ist.

4. Durchflusszytometer nach Anspruch 3, wobei ein Streulichtdetektor in einer Ebene angeordnet ist, die eine Einfallsrichtung des Lichts auf das Partikel und der Durchflussrichtung des Partikels einschließt.

5. Durchflusszytometer nach Anspruch 3 oder 4, wobei der Streulichtdetektor eine Lichtempfangsfläche aufweist, die angeordnet ist, um Licht zu empfangen, das von dem Partikel in einem Winkel zwischen 65 Grad und einem TIR-Winkel (internen Totalreflexionswinkel) in Bezug auf den Einfallswinkel des Lichts von der Lichtquelle gestreut wird, wobei die Lichtempfangsfläche optional so angeordnet werden kann, dass sie sich über mindestens 50 % eines Winkelbereichs erstreckt, der sich zwischen 65 Grad und dem TIR-Winkel in Bezug auf den Einfallswinkel des Lichts von der Lichtquelle am Partikel erstreckt, wobei der TIR-Winkel ein Winkel ist, bei dem das vom Partikel gestreute Licht an der gegenüberliegenden Seite der Durchflusszelle in Bezug auf die Einfallsseite des Lichts vollständig intern reflektiert wird.

6. Durchflusszytometer nach einem der Ansprüche 1 bis 5, wobei die Vielzahl von Lichtdetektoren einen Fluoreszenzdetektor (D1, D2) mit einer Lichtempfangsfläche umfasst, die so angeordnet ist, dass sie Fluoreszenzlicht von dem Partikel erfasst.

7. Durchflusszytometer nach Anspruch 6, wobei die Lichtempfangsfläche des Fluoreszenzdetektors parallel zum Lichtweg von der Lichtquelle angeordnet ist.

8. Durchflusszytometer nach Anspruch 6 oder 7, wobei
die Lichtempfangsfläche des Fluoreszenzdetektors entlang einer ersten Außenfläche der Durchflusszelle angeordnet ist und die Vielzahl von Lichtdetektoren einen weiteren Fluoreszenzdetektor mit einer Lichtempfangsfläche umfasst, die entlang einer zweiten Außenfläche gegenüber der ersten Außenfläche angeordnet ist, wobei die Lichtempfangsflächen sich optional über mindestens 25 % eines Winkelbereichs eines Lichtkegels erstrecken, der sich zwischen 30 und 150 Grad in Bezug auf die Einfallsrichtung des Lichts von der Lichtquelle am Partikel erstreckt.

9. Durchflusszytometer nach einem der Ansprüche 1 bis 8, wobei die Vielzahl von Lichtdetektoren mindestens drei Detektoren (D1, D2, D3) umfasst, die in drei verschiedenen Richtungen angeordnet sind.

10. Durchflusszytometer nach Anspruch 9, wobei die Vielzahl von Lichtdetektoren mindestens zwei Fluoreszenzdetektoren (D1, D2) und mindestens einen Streulichtdetektor (D3) umfasst.

11. Durchflusszytometer nach Anspruch 10, wobei die mindestens zwei Fluoreszenzdetektoren in einer ersten Höhe angeordnet sind, einschließlich einer ersten Position in Bezug auf die Durchflussrichtung des Partikels und des Streulichtdetektors, der sich in einer zweiten Höhe befindet, einschließlich einer zweiten Position, die sich von der ersten Position in Bezug auf die Durchflussrichtung des Partikels unterscheidet.

12. Durchflusszytometer nach Anspruch 11, wobei die erste Höhe auf derselben Höhe liegt wie ein Punkt, an dem das Licht auf das Partikel im Kanal trifft.

13. Durchflusszytometer nach einem der Ansprüche 1 bis 12, weiter umfassend
einen Referenzdetektor (D0), der angeordnet ist, um das von einer äußeren Oberfläche der Durchflusszelle reflektierte Licht der Lichtquelle zu erfassen; und
eine Steuereinheit (OMU), die konfiguriert ist, um eine Ausgabe von mindestens einer der Lichtquellen und der Vielzahl der Detektoren basierend auf dem vom Referenzdetektor erfassten Licht anzupassen.

14. Durchflusszytometer nach einem der Ansprüche 1 bis 13, wobei die Lichtquelle angeordnet ist so dass:
Licht von der Lichtquelle in einem Winkel auf den Durchflusskanal fällt, der im Wesentlichen dem Brewster-Winkel an der Außenfläche des Durchflusskanals entspricht; und/oder
Licht von der Lichtquelle in einem Winkel auf den Durchflusskanal fällt, der im Wesentlichen dem Brewster-Winkel an einer Innenfläche des Durchflusskanals entspricht.

15. Durchflusszytometer nach einem der Ansprüche 1 bis 14, wobei die Durchflusszelle in einer Ebene, die die Durchflussrichtung kreuzt, einen rechteckigen Querschnitt aufweist.

16. Durchflusszytometer nach einem der Ansprüche 1 bis 15, wobei jeder der Vielzahl von Lichtdetektoren mit Oberflächen der Durchflusszelle verbunden ist oder in Kontakt mit diesen steht.

17. Durchflusszytometer nach einem der Ansprüche 1 bis 16, wobei der Einfallswinkel zwischen 45° und 80° bei Einfall auf die Durchflusszelle beträgt.

18. Durchflusszytometer nach einem der Ansprüche 1 bis 17, wobei das Licht beim Auftreffen auf die Durchflusszelle p-polarisiert ist.

19. Durchflusszytometer nach einem der Ansprüche 1 bis 18, wobei mindestens einer der Vielzahl von Lichtdetektoren ein planarer Festkörperdetektor ist.

20. Durchflusszytometer nach Anspruch 19, wobei mindestens einer der Vielzahl von Lichtdetektoren ein segmentierter Detektor ist.

21. Durchflusszytometer nach einem der Ansprüche 1 bis 20, umfassend ein polarisationsselektives Element, das zwischen der Durchflusszelle und mindestens einem der Vielzahl von Lichtdetektoren angeordnet ist.

22. Durchflusszytometer nach einem der Ansprüche 1 bis 21, weiter umfassend ein Prismenelement, das zwischen der Durchflusszelle und mindestens einem der Vielzahl von Lichtdetektoren angeordnet ist.

23. Durchflusszytometer nach einem der Ansprüche 1 bis 22, wobei jeder der Vielzahl von Lichtdetektoren um die Durchflusszelle herum angeordnet ist, ohne dass sich dazwischen eine Linse befindet.

24. Verfahren für die Durchflusszytometrie, umfassend:
Fließenlassen einer Flüssigkeit (SF), die ein Partikel (P) enthält, durch einen Durchflusskanal(CH), der in einer Durchflusszelle (FC) definiert ist;
Emittieren von Licht von einer Lichtquelle (LS) auf das durch den Kanal fließende Partikel, wobei das Licht unter einem Einfallswinkel auf das Partikel trifft, der in Bezug auf die Durchflussrichtung des Partikels durch den Kanal gegenüber der Normalen geneigt ist; und
Empfangen von Licht von dem Partikel durch eine Vielzahl von Lichtdetektoren (D1, D2), die jeweils eine Lichtempfangsfläche aufweisen, an der Licht empfangen und ein entsprechendes Messsignal erzeugt werden kann, die um die Durchflusszelle herum angeordnet sind, wobei das Verfahren **dadurch gekennzeichnet ist, dass** die Vielzahl von Lichtdetektoren angeordnet sind, um an jeder Lichtempfangsfläche Licht zu empfangen, das von dem Partikel in einer linsenlosen Detektionsanordnung abstrahlt

## Revendications

1. Cytomètre de flux (10), comprenant :
une cellule d'écoulement (FC) définissant un canal d'écoulement (CH) pour faire s'écouler un liquide (SF) contenant une particule (P) à travers la cellule d'écoulement ;
une source lumineuse (LS) agencée pour émettre une lumière (L) vers la particule s'écoulant à travers le canal, la lumière étant incidente sur la particule selon un angle d'incidence incliné par rapport à une direction normale par rapport à une direction d'écoulement (FD) de la particule à travers le canal ; et
une pluralité de photodétecteurs (D1, D2), chacun présentant une surface de réception de lumière au niveau de laquelle la lumière peut être reçue et un signal de mesure correspondant généré, agencés autour de la cellule d'écoulement,
**caractérisé en ce que** la pluralité de photodétecteurs sont agencés pour recevoir au niveau de chaque surface de réception de lumière la lumière divergeant de la particule dans un agencement de détection sans lentille.

2. Cytomètre de flux selon la revendication 1, dans lequel
la pluralité de photodétecteurs sont agencés autour d'un chemin lumineux en provenance de la source lumineuse par rapport à un point où la lumière est incidente sur la particule dans le canal.

3. Cytomètre de flux selon la revendication 1 ou 2, dans lequel la pluralité de photodétecteurs comprend un détecteur de lumière diffuse (D3) qui est agencé pour détecter une lumière diffuse qui est diffusée par la particule dans une direction croisant un chemin lumineux en provenance de la source lumineuse, le détecteur de lumière diffuse étant agencé sur un côté opposé de la cellule d'écoulement par rapport au côté incident de la lumière et à distance d'un chemin lumineux de lumière non diffusée en provenance de la source lumineuse.

4. Cytomètre de flux selon la revendication 3, dans lequel un détecteur de lumière diffuse est situé dans un plan incluant une direction d'incidence de la lumière sur la particule et la direction d'écoulement de la particule.

5. Cytomètre de flux selon la revendication 3 ou 4, dans lequel le détecteur de lumière diffuse présente une surface de réception de lumière qui est agencée pour recevoir la lumière diffusée par la particule à un angle compris entre 65 degrés et un angle TIR par rapport à l'angle d'incidence de la lumière en provenance de la source lumineuse, la surface de réception de lumière étant facultativement agencée pour s'étendre à travers au moins 50 % d'une plage d'angles s'étendant entre 65 degrés et l'angle TIR par rapport à l'angle d'incidence de la lumière en provenance de la source lumineuse au niveau de la particule, l'angle TIR étant un angle au niveau duquel la lumière diffusée par la particule est entièrement réfléchie en interne sur le côté opposé de la cellule d'écoulement par rapport au côté incident de la lumière.

6. Cytomètre de flux selon l'une quelconque des revendications 1 à 5, dans lequel la pluralité de photodétecteurs comprend un détecteur de fluorescence (D1, D2) présentant une surface de réception de lumière agencée pour détecter la lumière fluorescente en provenance de la particule.

7. Cytomètre de flux selon la revendication 6, dans lequel la surface de réception de lumière du détecteur de fluorescence est agencée parallèlement au chemin lumineux en provenance de la source lumineuse.

8. Cytomètre de flux selon la revendication 6 ou 7, dans lequel la surface de réception de lumière du détecteur de fluorescence est agencée le long d'une première surface extérieure de la cellule d'écoulement, et la pluralité de photodétecteurs comprend un autre détecteur de fluorescence présentant une surface de réception de lumière qui est agencée le long d'une seconde surface extérieure opposée à la première surface extérieure, les surfaces de réception de lumière s'étendant facultativement à travers au moins 25 % d'une plage d'angles d'un cône de lumière s'étendant entre 30 et 150 degrés par rapport à la direction d'incidence de la lumière en provenance de la source lumineuse au niveau de la particule.

9. Cytomètre de flux selon l'une quelconque des revendications 1 à 8, dans lequel la pluralité de photodétecteurs comprend au moins trois détecteurs (D1, D2, D3) qui sont agencés dans trois directions différentes.

10. Cytomètre de flux selon la revendication 9, dans lequel la pluralité de photodétecteurs comprend au moins deux détecteurs de fluorescence (D1, D2) et au moins un détecteur de lumière diffuse (D3).

11. Cytomètre de flux selon la revendication 10, dans lequel les au moins deux détecteurs de fluorescence sont situés à une première hauteur incluant une première position par rapport à la direction d'écoulement de la particule et le détecteur de lumière diffuse est situé à une seconde hauteur incluant une seconde position qui est différente de la première position par rapport à la direction d'écoulement de la particule.

12. Cytomètre de flux selon la revendication 11, dans lequel la première hauteur est à la même hauteur qu'un point où la lumière est incidente sur la particule dans le canal.

13. Cytomètre de flux selon l'une quelconque des revendications 1 à 12, comprenant en outre
un détecteur de référence (D0) agencé pour détecter une lumière en provenance de la source lumineuse qui est réfléchie par une surface extérieure de la cellule d'écoulement ; et
un dispositif de commande (OMU) configuré pour régler une sortie en provenance d'au moins un élément parmi la source lumineuse et la pluralité de détecteurs sur la base de la lumière détectée par le détecteur de référence.

14. Cytomètre de flux selon l'une quelconque des revendications 1 à 13, dans lequel la source lumineuse est agencée de sorte que :
la lumière en provenance de la source lumineuse est incidente sur le canal d'écoulement selon un angle correspondant sensiblement à l'angle de Brewster au niveau de la surface extérieure du canal d'écoulement ; et/ou
la lumière en provenance de la source lumineuse est incidente sur le canal d'écoulement selon un angle correspondant sensiblement à l'angle de Brewster au niveau d'une surface intérieure du canal d'écoulement.

15. Cytomètre de flux selon l'une quelconque des revendications 1 à 14, dans lequel la cellule d'écoulement présente une section transversale rectangulaire dans un plan traversant la direction d'écoulement.

16. Cytomètre de flux selon l'une quelconque des revendications 1 à 15, dans lequel chacun de la pluralité des photodétecteurs est lié ou en contact avec des surfaces de la cellule d'écoulement.

17. Cytomètre de flux selon l'une quelconque des revendications 1 à 16, dans lequel l'angle d'incidence est compris entre 45° et 80° au niveau de l'incidence sur la cellule d'écoulement.

18. Cytomètre de flux selon l'une quelconque des revendications 1 à 17, dans lequel la lumière est polarisée p au niveau de l'incidence sur la cellule d'écoulement.

19. Cytomètre de flux selon l'une quelconque des revendications 1 à 18, dans lequel au moins un élément parmi la pluralité de photodétecteurs est un détecteur d'état solide plan.

20. Cytomètre de flux selon la revendication 19, dans lequel au moins un élément parmi la pluralité de photodétecteurs est un détecteur segmenté.

21. Cytomètre de flux selon l'une quelconque des revendications 1 à 20, comprenant un élément sélectif de polarisation agencé entre la cellule d'écoulement et au moins un élément parmi la pluralité de photodétecteurs.

22. Cytomètre de flux selon l'une quelconque des revendications 1 à 21, comprenant en outre un élément de prisme agencé entre la cellule d'écoulement et au moins un élément parmi la pluralité de photodétecteurs.

23. Cytomètre de flux selon l'une quelconque des revendications 1 à 22, dans lequel chacun de la pluralité de photodétecteurs sont agencés autour de la cellule d'écoulement sans avoir de lentille entre eux.

24. Procédé de cytométrie en flux, comprenant :
faire s'écouler un liquide (SF) contenant une particule (P) à travers un canal d'écoulement (CH) défini dans une cellule d'écoulement (FC) ;
émettre une lumière en provenance d'une source lumineuse (LS) vers la particule s'écoulant à travers le canal, la lumière étant incidente sur la particule selon un angle d'incidence incliné par rapport à une direction normale par rapport à une direction d'écoulement de la particule à travers le canal ; et
recevoir la lumière en provenance de la particule par une pluralité de photodétecteurs (D1, D2), chacun présentant une surface de réception de lumière au niveau de laquelle la lumière peut être reçue et un signal de mesure correspondant généré, agencés autour de la cellule d'écoulement, le procédé étant **caractérisé en ce que** la pluralité de photodétecteurs sont agencés pour recevoir au niveau de chaque surface de réception de lumière la lumière divergeant de la particule dans un agencement de détection sans lentille.
